# EUROPEAN PATENT APPLICATION

(11) **EP 1 568 722 A1**
(43) Date of publication of application: **31.08.2005**
(21) Application number: 03775983.4
(22) Date of filing: 01.12.2003
(51) Int. Cl.: C08F 232/06, C08F 8/04, C09J 145/00

(54) **METHOD FOR PRODUCING PETROLEUM RESIN AND HYDROGENATED PETROLEUM RESIN**

(30) Priority: 06.12.2002 JP 2002355482
(71) Applicant: IDEMITSU KOSAN COMPANY LIMITED, Tokyo 100-0005 (JP)
(72) Inventor: YAMANE, Hideki, Shunan-shi, Yamaguchi 745-0843 (JP)
(74) Representative: Gille, Christian
(86) International application number: PCT/JP2003/015335
(87) International publication number: WO 2004/052955

(57) **Abstract**

The present invention relates to a process for producing a petroleum resin which comprises subj ecting a cyclopentadiene based compound and a vinyl-substituted aromatic compound substantially free from a high molecular weight substance to copolymerization reaction in the presence of a solvent. According to the present invention, it is made possible thereby to obtain a petroleum resin and a hydrogenated petroleum resin which are each minimized in the amounts of high molecular weight substances and which have each narrow molecular weight distribution.

## Description

### TECHNICAL FIELD

The present invention relates to a process for producing a petroleum resin which is obtained through the implementation of copolymerization reaction by the use of a specific vinyl-substituted aromatic compound; a hydrogenated petroleum resin which is obtained by hydrogenating the aforesaid petroleum resin; a process for producing the aforestated hydrogenated petroleum resin; and a hot melt adhesive composition excellent in self-adhesive strength which contains the aforestated hydrogenated petroleum resin.

### BACKGROUND ART

A hot melt adhesive is presently expanding its effective application in a variety of fields owing to its being excellent in high speed coating properties, highratecurability, solventless properties, barrier properties, energy saving properties, economical efficiency and the like.

There are used as a general hot melt adhesive, a composition in which a tackifying resin and / or a plasticizer are blended in a base polymer such as natural rubber, ethylene-vinyl acetate copolymer, styrene-butadiene-styrene block copolymer, a hydrogenated product therefrom, styrene-isoprene-styrene block copolymer and a hydrogenated product therefrom, and the like compositions.

There are generally used as a tackifying resin, a petroleum resin, a coumarone based-resin, a phenolic resin, a turpentine resin, a resin called rosin resin and a hydrogenated product therefrom.

The hot melt adhesive is composed principally of three components including a tackifying resin, a base polymer and a plasticizer. Of these, the property of the tackifying resin is one of the factors which exert great influences on the performances of the hot melt adhesive.

However, the petroleum resin which is obtained by a conventional production process contains a high molecular weight substance having an average molecular weight of several ten thousands to several hundred thousands as the case may be, whereby the self-adhesive performance such as self-adhesive strength and preservation strength is deteriorated.

The above-mentioned facts have been discovered by the present inventors, but can not be found in any of prior arts or literatures.

The present invention has been made in the light of the above-mentioned circumstances, and it is an object thereof to develop a tackifying resin excellent in self-adhesive strength and preservation strength.

### DISCLOSURE OF THE INVENTION

As a result of intensive extensive research and investigation accumulated by the present inventor in order to solve the above-mentioned subject, it has been found that the content of a homopolymer which has at least a specific molecular weight and is contained in a vinyl-substituted aromatic compound in a petroleum resin obtained by copolymerization is closely correlated with the self-adhesive performance and that a petroleum resin which is minimized in the contents of a high molecular weight substance and which has a narrow molecular weight distribution is obtainable by making use of a vinyl-substituted aromatic compound substantially free from a high molecular weight substance as a starting raw material in the copolymerization reaction. Thus the present invention has been accomplished on the basis of the foregoing findings and information.

Specifically, the present invention is concerned with the following:
1. A process for producing a petroleum resin which comprises subjecting a cyclopentadiene based compound and a vinyl-substituted aromatic compound substantially free from a high molecular weight substance to copolymerization reaction in the presence of a solvent.
2. A process for producing a hydrogenated petroleum resin which comprises subjecting a cyclopentadiene based compound and a vinyl-substituted aromatic compound substantially free from a high molecular weight substance to copolymerization reaction in the presence of a solvent and thereafter to hydrogenation reaction.
3. A hydrogenated petroleum resin which is produced by the process as set forth in the preceding item 2, and which has a maximum molecular weight as determined by gel permeation chromatography (GPC) being 18000 or lower.
4 . A hot melt adhesive composition which comprises the hydrogenated petroleum resin as set forth in the preceding item 3.

### THE MOST PREFERRED EMBODIMENT TO CARRY OUT THE INVENTION

### (1) Petroleum resin

Examples of the above-mentioned cyclopentadiene based compound in relation to the present invention include cyclopentadiene, methyl cyclopentadiene, ethyl cyclopentadiene, a dimer thereof and a codimer thereof.

Examples of the above-mentioned vinyl aromatic compound include styrene, α-methylstyrene, β-methylstyrene, vinyltoluene, vinylxylene, lindene, methylindene and ethylindene.

Examples of the polymerization solvent which can be used in the process for producing a petroleum resin by means of copolymerization reaction according to the present invention include an aromatic solvent, a naphthene base solvent and an aliphatic hydrocarbon base solvent. For instance, there are preferably usable such solvents as benzene, toluene, xylene, cyclohexane, dimethyl cyclohexane, ethyl cyclohexane and the like.

The amount of the polymerization solvent to be used therein is 50 to 500 parts by mass, preferably 60 to 300 parts by mass based on 100 parts by mass of a total of the above-mentioned cyclopentadiene based compound and/or the dicyclopentadiene based compound and the vinyl-substituted aromatic compound substantially free from a high molecular weight substance.

It is preferable in the process for producing a petroleum resin according to the present invention that the aforestated solvent be heated in advance to 100°C, preferably 150°C upon starting the copolymerization reaction.

The copolymerization reaction is put into practice by dividedly adding in the solvent thus heated, a mixture of the cyclopentadiene based compound and / or the dicyclopentadiene based compound and the vinyl-substituted aromatic compound substantially free from a high molecular weight substance. In this case, it is preferable to carry out the divisional addition in equal parts.

The high molecular weight substance which is contained in the vinyl-substituted aromatic compound in relation to the present invention is a compound having a molecular weight of 20,000 or more, and is contained therein in an amount of at most 300 ppm by mass, preferably at most 100 ppm by mass.

The vinyl-substituted aromatic compound, for instance, styrene and a distillate containing styrene is generally preserved in the coexistense of a polymerization inhibitor such as tertiary butyl catechol, but as a preservation period is prolonged, polymerization reaction slightly takes place with a result that the high molecular weight substance increase. Thus unless appropriate preservation measures (such as light shielding control and temperature control) are taken, the polymerization reaction is accelerated. In addition, depending upon a distillate containing styrene the high molecular weight substance is originally contained therein as the case may be. Under a usual preservation condition, the content of the high molecular weight substance (a compound having an average molecular weight detected by means of reprecipitation method usually being several ten thousands to several hundred thousands) which is contained in the vinyl-substituted aromatic compound such as styrene sometimes exceeds 300 ppm by mass.

The vinyl-substituted aromatic compound to be used in the present invention which is substantially free from the high molecular weight substance is obtainable, for instance, by subjecting a vinyl-substituted aromatic compound containing the high molecular weight substance to distillation refining or the like.

The blending ratio of the cyclopentadiene based compound and / or the dicyclopentadiene based compound to the vinyl-substituted aromatic compound substantially free from a high molecular weight substance is not specifically limited, but it is usually in the range of 70 : 30 to 20 : 80, preferably 60 : 40 to 40 : 60.

The period of time for divisional addition of the resultant mixture is usually in the range of 0.5 to 5 hours, preferably 1 to 3 hours.

It is preferable that the copolymerization reaction be consecutively put into practice even after the completion of divisional addition of the mixture of the cyclopentadiene based compound and / or the dicyclopentadiene based compound and the vinyl-substituted aromatic compound substantially free from a high molecular weight substance.

The copolymerization reaction conditions are not specifically limited, but usually include a reaction temperature in the range of 150 to 350°C, preferably 220 to 300°C, reaction pressure in the range of 0 to 2 MPa, preferably 0 to 1.5 MPa and a reaction time in the range of 1 to 10 hours, preferably 1 to 8 hours.

The petroleum resin according to the present invention is obtainable by removing volatile components in the copolymerization reaction product obtained in the above-mentioned manner, for instance, through a treatment thereof at a temperature in the range of 100 to 300°C, pressure in the range of 0.133 to 13.3 kPa (1 to 100 mmHg), and a treatment time in the range of 1 to 3 hours, said volatile components being exemplified by not only a solvent but also a low molecular weight substance.

The petroleum resin according to the present invention obtained in the above-mentioned manner has a softening point in the range of 50 to 120°C, a vinyl-substituted aromatic compound content in the range of 30 to 90 mass %, a bromine value in the range of 30 to 90 g / 100 g, a number average molecular weight in the range of 400 to 1100 and a maximum molecular weight of at most 30,000.

### {hydrogenated petroleum resin}

The hydrogenated petroleum resin according to the present invention is obtainable by subjecting the above-stated petroleum resin to hydrogenation reaction.

The hydrogenation reaction of the petroleum resin can be put into practice in the presence of a catalyst such as nickel, palladium, cobalt, platinum or rhodium in a solvent such as cyclohexane or tetrahydrofuran at a temperature in the range of 120 to 300°C, preferably 150 to 250°C, pressure in the range of 1 to 6 MPa, preferably 3 to 6 MPa and a reaction time in the range of 1 to 7 hours, preferably 2 to 5 hours.

The hydrogenation reaction according to the present invention is a partial hydrogenation reaction or a complete hydrogenation reaction, each hydrogenating aromatic rings as well.

The hydrogenated petroleum resin according to the present invention is obtainable by removing volatile components in the hydrogenation reaction product obtained in the above-mentioned manner, for instance, through a treatment thereof at a temperature in the range of 100 to 300°C, pressure in the range of 0.133 to 13.3 kPa (1 to 100 mmHg), and a treatment time in the range of 1 to 3 hours, said volatile components being exemplified by not only a solvent but also a low molecular weight substance.

The hydrogenated petroleum resin according to the present invention obtained in the above-mentioned manner has a softening point in the range of 90 to 160°C, a vinyl-substituted aromatic compound content in the range of 0 to 35 mass %, a bromine value in the range of 0 to 30 g / 100 g, a number average molecular weight in the range of 500 to 1100 and a maximum molecular weight of at most 30,000.

### {Hot melt adhesive composition}

The hot melt type adhesive composition according to the present invention is obtainable by blending the above-mentioned hydrogenated petroleum resin with a base polymer, a plasticizer and the like.

Examples of the base polymer include natural rubber, ethylene-vinyl acetate copolymer (EVA), non-crystalline poly-α-olefin, styrene-butadiene-styrene block copolymer (SBS), styrene-isoprene-styrene block copolymer (SIS) and styrene-ethylene-butylene-styrene rubber (SEBS) and styrene-ethylene-propylene-styrene rubber (SEBS), both being obtained by hydrogenating any of the rubber components.

Examples of the plasticizer include a paraffin base process oil which is obtainable by vacuum distilling fuel oil obtained through atmospheric distillation of crude petroleum and further refining the oil through hydrorefining, a dewaxing treatment or the like, and a naphthene base process oil which is obtainable by vacuum distilling fuel oil, followed by solvent extraction, hydrogenation reaction and clay treatment. Examples thereof also include polybutene and poly-α-olefin in the form of liquid.

The process for producing the hot melt type adhesive composition according to the present invention is not specifically limited, but there is usable a process which comprises subjecting the above-mentioned blend to heat melting agitation or kneading by the use of a propeller type agitator, a twin screw kneader, a kneader or the like.

The order of blending the hydrogenated petroleum resin, base polymer and plasticizer is not specifically limited.

Likewise, the heating temperature is not specifically limited, but may be a temperature in the range of 120 to 190°C.

The blending proportions of the above-mentioned three components, which vary depending upon the physical properties of the objective hot melt adhesive composition, are such that the hydrogenated petroleum resin, the base polymer and the plasticizer are in the range of 30 to 70% by mass, 15 to 40% by mass and 10 to 40% by mass, respectively.

The hot melt adhesive composition according to the present invention may be incorporated with an antioxidant, wax, a filler and the like in addition to the above-mentioned three components to the extent that the physical properties thereof are not impaired by such adding.

In what follows, the present invention will be described in more detail with reference to working examples, which however shall never limit the present invention thereto.

### {Analysis method, method of measuring physical properties and method of evaluating performances of hot melt adhesive composition }

(1) Content of vinyl-substituted aromatic compound
   The content of vinyl-substituted aromatic compound was determined by means of an infrared spectrophotometer (absorbency of 700 cm⁻¹).
(2) Bromine value
   The bromine value thereof was determined in accordance with JIS K2605.
(3) Softening point
   The softening point thereof was determined in accordance with JIS K2207.
(4) Melt viscosity
   The melt viscosity thereof was determined in accordance with JIS K6862 by the use of a Brookfield viscometer.
(5) Self-adhesive strength
   The self-adhesive strength thereof was determined in accordance with JIS Z0237.
(6) The preservation strength
   The preservation strength thereof was determined in accordance with JIS Z0237.
(7) Loop tack
   The loop tack thereof was determined in accordance with FINAT testing standard.
(8) Clouding point
   The clouding point thereof was determined by a method in which 20 g of a sample was placed in a test tube, heated until it turns transparent, and then allowed to cool at 25°C under stirring, while the temperature at which the sample begins to cloud is regarded as the clouding point.
(9) Creep at constant temperature
   The creep at constant temperature thereof was determined in accordance with JAI (Japan Adhesive Industries Association Standard) method B.
(10) Determination by GPC (determination of maximum molecular weight)
   Column: TSK gel G200H_{XL} & G4000H_{XL}
   Flow rate: 1 mL / min
   Eluting liquid: THF
   Temperature: 40°C
(11) Determination high molecular weight substance)
   The high molecular weight substance was determined in accordance with JIS-K-6727 by the correlation between the permeability and precipitated high molecular weight substance when styrene is mixed with methanol.

### Example 1

### {Distillation of styrene}

A simple distillation unit packed with glass beads was continuously charged from overhead with styrene in which tertiary butyl catechol was dissolved under the conditions including a temperature in the range of 40 to 50°C, pressure of 1 kpa (7.5 mmHg) and a reflux ratio of 1 to 3. Thus styrene containing 2 ppm by mass of high molecular weight substances was obtained as a distillate.

### {Preparation of petroleum resin}

To a one liter polymerization reactor which was equipped with a stirrer and the atmosphere in which was purged with nitrogen were added 332 g of xylene as the solvent {in an amount of 90 parts by mass based on 100 parts by mass of the starting raw monomers, namely a cyclopentadiene (CPD)/dicyclopentadiene (DCPD) mixture at a mixing ratio by weight of CPDD / CPD being 2 / 8 and a styrene mixture}, followed by heating to 260°C. Then to the polymerization reactor were further added under stirring, 184 g of a cyclopentadiene (CPD)/dicyclopentadiene (DCPD) mixture and 184 g of a styrene mixture containing 2 ppm by mass of the high molecular weight substances over a period of 180 minutes. Thereafter the copolymerization reaction was continuously carried out for 130 minutes.

After the completion of the copolymerization reaction, unreacted monomers and the xylene were removed by the use of a rotary evaporator through a treatment at a temperature of 200°C and pressure of 1.33 kPa (10 mmHg) for 2 hours, whereby 344 g of a copolymer of (di) cyclopentadiene and styrene (petroleum resin) was obtained. The physical chemical properties of the resultant copolymer are given in Table 1.

### Example 2 (Preparation of hydrogenated petroleum resin)

To a 300 milliliter hydrogenation reactor which was equipped with a stirrer and the atmosphere in which was purged with nitrogen were added 70 g of cyclohexane as the solvent, 70 g of the copolymer which had been obtained in Example 1 and 1. 5 g of a nickel catalyst (manufactured by Nikki Chemical Co.,Ltd. under the trade name "N-112"). Subsequently the mixture therein was subjected to hydrogenation reaction at hydrogen pressure of 4 Mpa and a temperature of 230°C for 4 hours.

After the completion of the hydrogenation reaction, hydrogenation reactionproduct was taken out therefrom, and was incorporated with 4000 ppm of an antioxidant (manufactured by Chiba Specialty Chemicals K.K. Japan under the trade name "Irganox1010"), and cyclohexane was removed by the use of a rotary evaporator through a treatment at a temperature of 200°C and pressure of 1.33 kPa (10 mmHg) for one hour, whereby 70 g of a hydrogenated copolymer of (di)cyclopentadieneandstyrene (hydrogenated petroleum resin) was obtained. The physical chemical properties of the resultant copolymer are given in Table 1.

### Example 3 (Preparation of hot melt adhesive composition and evaluation thereof)

A hot melt adhesive composition was prepared by the use of a kneader by kneading at a temperature of 170°C for 60 to 80 minutes, the hydrogenated copolymer which had been obtained in Example 2; EVA (ethylene / vinyl acetate copolymer){manufactured by Tosoh Corporation under the trade names "Ultrathene 720" and "Ultrathene 722"}; and two types of wax (manufactured by NIPPON SEIRO Co., Ltd. under the trade name "Hi-Mic1080" and manufactured by Sazol Public Corporation under the trade name" PARAFLINT H1"). Thus, evaluations were made of the physical properties of the resultant hot melt adhesive composition. The results are given in Table 2.

### Example 4 (Preparation of hot melt adhesive composition and evaluation thereof)

A hot melt adhesive composition was prepared by the use of a kneader-Labo plastomill by kneading at a temperature of 140°C for 40 minutes, the hydrogenated copolymer which had been obtained in Example 2; SBS (styrene-butadiene-styrene block copolymer) {manufactured by Shell Japan Co. , Ltd. under the trade name "Kraton D-1102JS", styrene / rubber mass ratio being 30 / 70); oil {manufactured by Idemitsu Kosan Co.,Ltd. under the trade name "PS-32); and an antioxidant (manufactured by Chiba Specialty Chemicals K.K. Japan under the trade name "Irganox 1010") each at a blending ratio as given in Table 3. Thus, evaluations were made of the physical properties of the resultant hot melt adhesive composition. The results are given in Table 3.

### Comparative Example 1 (Preparation of petroleum resin)

The procedure in Example 1 was repeated to carry out the copolymerization reaction and operations except that use was made of styrene containing 500 ppm by mass of high molecular weight substances. As a result, there was obtained 346 g of (di)cyclopentadiene / styrene copolymer (petroleum resin). The physical chemical properties of the resultant copolymer are given in Table 1.

### Comparative Example 2 (Preparation of hydrogenated petroleum resin)

The procedure in Example 2 was repeated to carry out the hydrogenation reaction and operations except that use was made of the copolymer which had been obtained in Comparative Example 1. As a result, there was obtained 71 g of hydrogenated copolymer of (di)cyclopentadiene and styrene (hydrogenated petroleum resin). The physical chemical properties of the resultant copolymer are given in Table 1.

### Comparative Example 3 (Preparation of hot melt adhesive composition and evaluation thereof)

The procedure in Example 3 was repeated to carry out the operations except that use was made of the hydrogenated copolymer which had been obtained in Comparative Example 2. As a result, there was obtained a hot melt adhesive composition. Thus, evaluations were made of the physical properties of the resultant hot melt adhesive composition. The results are given in Table 2.

### Comparative Example 4 (Preparation of hot melt adhesive composition and evaluation thereof)

The procedure in Example 4 was repeated to carry out the operations except that use was made of the hydrogenated copolymer which had been obtained in Comparative Example 2. As a result, there was obtained a hot melt adhesive composition. Thus, evaluations were made of the physical properties of the resultant hot melt adhesive composition. The results are are given in Table 3.

**Table 1**

| | Example 1 | Example 2 | Comp. Example 1 | Comp. Example 2 |
|---|---|---|---|---|
| | copolymer | hydrogenated product | copolymer | hydrogenated product |
| Softening point (°C) | 75 | 95 | 76 | 96 |
| Styrene content (mass%) | 47 | 19 | 48 | 20 |
| Bromine value (g/100g) | 56 | 7 | 56 | 6 |
| Maximum molecular wt. (measured by GPC) | 11500 | 12000 | 18500 | 19000 |
| Comp.=Comparative | | | | |

**Table 2**

| | Example 3 | Comp.Example 3 |
|---|---|---|
| BLENDING | | |
| EVA (Ultracene 720) (parts by mass) | 15 | 15 |
| EVA (Ultracene 722) (parts by mass) | 20 | 20 |
| Hydrogenated product in Example 2 (parts by mass) | 50 | - |
| Hydrogenated product in Comp.Example 2 (parts by mass) | - | 50 |
| Wax (Hi·MIc3080) (parts by mass) | 10 | 10 |
| Wax (Sazol H1) (parts by mass) | 5 | 5 |

| PERFORMANCE | | |
|---|---|---|
| Clouding point (°C) | 114 | 120 |
| Creep at constant [50°C] (minutes) | 180 | 161 |
| Melt viscosity [180°C] (MPa • s) | 1260 | 1310 |

**Table 3**

| | Example 4 | Comp.Example 4 |
|---|---|---|
| BLENDING | | |
| SBS (KraytonD 1102JS) (parts by mass) | 25 | 25 |
| Hydrogenated product in Example 2 (parts by mass) | 60 | - |
| Hydrogenated product in Comp.Example 2 (parts by mass) | - | 60 |
| Oil (PS-32) (parts by mass) | 15 | 15 |
| Antioxidant (Irganox 1010) (parts by mass) | 1 | 1 |

| PERFORMANCE | | |
|---|---|---|
| Softening point (°C) | 79 | 79 |
| Melt viscosity [180°C] (MPa • s) | 7470 | 7600 |
| Self-adhesive strength [23°C] (N/cm) | 8.1 | 7.1 |
| Loop tack [23°C] (N/cm) | 8.5 | 3.9 |
| Preservation strength [40°C] (mm & minut)¹⁾ | 1.0 & 60 | 0.9 & 60 |
| [Remarks] 1):Determined by dislocation rang during a constant period of time | | |

As can be seen from Tables 2 & 3, the hot melt adhesive compositions in Examples 3 & 4, respectively are excellent in clouding point which is an index of compatibility, creep at a constant temperature which is an index of heat resistance and self-adhesive performances such as self-adhesive strength and loop tack as compared with those in Comparative Examples 3 & 4, respectively.

### INDUSTRIAL APPLICABILITY

According to the present invention, it is made possible to obtain a petroleum resin and a hydrogenated petroleum resin which are each minimized in the amounts of high molecular weight substances and which have each narrow molecular weight distribution.

In addition, the hot melt adhesive composition which is obtainable by the use of the hydrogenated petroleum resin according to the present invention is excellent in fluidity at the time of heating, heat stability and weather resistance and accordingly can be utilized in a variety of fields for use in sanitary materials, packaging, bookbinding, fiber, wood working, electrical materials, can making, buildings, bag making and binders for road and the like.

## Claims

1. A process for producing a petroleum resin which comprises subjecting a cyclopentadiene based compound and a vinyl-substituted aromatic compound substantially free from a high molecular weight substance to copolymerization reaction in the presence of a solvent.

2. A process for producing a hydrogenated petroleum resin which comprises subjecting a cyclopentadiene based compound and a vinyl-substituted aromatic compound substantially freefromahigh molecular weight substance to copolymerization reaction in the presence of a solvent and thereafter to hydrogenation reaction.

3. A hydrogenated petroleum resin which is produced by the process as set forth in Claim 2, and which has a maximum molecular weight as determined by gel permeation chromatography (GPC) being 18000 or lower.

4. A hot melt adhesive composition which comprises the hydrogenated petroleum resin as set forth in Claim 3.
